# FASCICULE DE BREVET EUROPEEN

(11) **EP 3 912 529 B1**
(45) Date de publication et mention de la délivrance du brevet: **07.06.2023**
(21) Numéro de dépôt: 21174551.8
(22) Date de dépôt: 18.05.2021
(51) Int. Cl.: A47J 37/06

(54) **APPAREIL DE CUISSON MUNI D'UN DISPOSITIF D'EMBRAYAGE ET DE DÉBRAYAGE D'UN ACCESSOIRE DE CUISINE PLACÉ DANS UNE CUVE DE L'APPAREIL**
KOCHGERÄT MIT EINER VORRICHTUNG ZUM EIN- UND AUSKUPPELN EINES KOCHZUBEHÖRTEILS, DAS IN EINEM BEHÄLTER DES GERÄTS PLATZIERT IST
COOKING APPLIANCE PROVIDED WITH A DEVICE FOR ENGAGEMENT AND DISENGAGEMENT OF A KITCHEN ACCESSORY PLACED IN A VESSEL OF THE DEVICE

(30) Priorité: 19.05.2020 FR 2005042
(43) Date de publication de la demande: 24.11.2021
(73) Titulaire: SEB S.A., 69130 Ecully (FR)
(72) Inventeur: ALLEMAND, Bernard, 70100 VELESMES-ECHEVANNE (FR); FRADET, Gautier, 21120 ECHEVANNES (FR)
(74) Mandataire: SEB Développement

(56) Documents cités:
- CN-U- 204 192 406
- CN-U- 208 973 522

## Description

### Domaine technique

La présente invention concerne les appareils de cuisson qui comportent une cuve amovible et un accessoire de cuisine placé et entraîné en rotation dans la cuve grâce à un système d'entraînement en rotation, notamment pour effectuer un brassage des aliments à cuire placés dans cette cuve.

L'invention concernera en particulier les appareils de cuisson à air chaud, du type friteuse à air chaud, qui permettent de réaliser une cuisson des aliments au moyen d'une circulation d'air chaud dans une enceinte de cuisson de cet appareil, la cuve étant placée de manière amovible dans cette enceinte de cuisson. Cependant, la mise en oeuvre de l'invention pourra être envisagée sur d'autres appareils de cuisson présentant des caractéristiques comparables, c'est-à-dire un accessoire de cuisine placé et entraîné en rotation dans une cuve amovible d'une enceinte de cuisson.

L'invention a pour objectif principal d'optimiser la conception du système d'entraînement de l'accessoire de cuisine sur l'appareil de cuisson.

### Etat de la technique

Les appareils de cuisson du type friteuse à air chaud sont bien connus de l'homme du métier. Un tel appareil de cuisson permet de réduire fortement la quantité de matière grasse, voire de la supprimer complètement, lors de la cuisson des aliments qui s'effectue grâce à une circulation d'air chaud dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

Un tel appareil de cuisson comprend généralement un corps et une cuve amovible qui permet la réception des aliments à cuire. Les aliments peuvent être placés soit directement dans la cuve soit dans un panier qui est lui-même placé dans la cuve. Une fois les aliments disposés dans la cuve, avec ou sans le panier, le corps de l'appareil de cuisson peut être fermé pour former une enceinte de cuisson incorporant la cuve, avec ou sans le panier, et les aliments. De l'air chaud est ensuite pulsé dans cette enceinte de cuisson au moyen d'un dispositif de chauffe et d'un dispositif de circulation d'air, la circulation de l'air chaud dans l'enceinte assurant la cuisson des aliments.

Le dispositif de circulation d'air comprend un ventilateur qui permet une circulation de l'air en boucle à l'intérieur du corps de l'appareil de cuisson de sorte à acheminer cet air jusqu'à l'enceinte de cuisson en passant par le dispositif de chauffe, l'air chauffé circulant dans la cuve avant de sortir de l'enceinte de cuisson et d'effectuer un nouveau cycle de circulation dans le corps de l'appareil de cuisson.

Un tel appareil de cuisson comprend en outre un accessoire de cuisine, du type pale de brassage, qui se positionne dans la cuve et permet de brasser les aliments durant leur cuisson. Cette pale de brassage est entraînée en rotation grâce à un système d'entraînement en rotation.

Il est par exemple connu le modèle d'utilité chinois CN208973522U qui décrit un appareil de cuisson présentant des caractéristiques semblables à celles précitées. Selon ce modèle d'utilité chinois CN208973522U, la cuve comprend une noix d'entraînement qui est montée en rotation sur le fond de la cuve et passe au travers de celui-ci, la noix d'entraînement étant assujettie à une roue dentée agencée sous le fond de la cuve et tournant selon un même axe de rotation que ladite noix d'entraînement. La pale de brassage, disposée dans la cuve, est accouplée à cette noix d'entraînement. Le corps de l'appareil comprend un moteur qui entraîne en rotation un pignon dentée, ce pignon denté étant agencé dans le fond de l'enceinte de cuisson. Lorsque la cuve est placée dans l'enceinte de cuisson, la roue dentée vient engrener avec le pignon denté, la rotation du moteur permettant ainsi l'entraînement en rotation de la pale de brassage dans la cuve.

### Exposé de l'invention

La présente invention a pour objectif de concevoir un système d'entraînement en rotation de l'accessoire de cuisine qui se différencie complètement de celui mis en oeuvre dans le modèle d'utilité chinois CN208973522U précité.

A ce titre, l'invention concerne un appareil de cuisson pour la réalisation d'une préparation culinaire, lequel comprend un corps muni d'une enceinte de cuisson et une cuve de réception d'aliments présentant un volume intérieur et placée de manière amovible dans l'enceinte de cuisson. La cuve de réception comprend un fond comportant une ouverture centrale ménagée pour le passage d'une noix d'entrainement destinée à entrainer en rotation un accessoire de cuisine amovible disposé à un emplacement déterminé dans ladite cuve de réception. En outre, le corps comprend un dispositif motorisé agencé pour entrainer en rotation la noix d'entrainement. De manière remarquable, selon l'invention, l'appareil de cuisson comprend un dispositif de déplacement de la noix d'entrainement entre une position débrayée dans laquelle la noix d'entrainement est en retrait de l'ouverture centrale de la cuve de réception et en retrait de l'accessoire de cuisine lorsque celui-ci est disposé à son emplacement déterminé dans la cuve de réception et, une position embrayée dans laquelle la noix d'entrainement est en prise avec l'accessoire de cuisine lorsque celui-ci est disposé à son emplacement déterminé dans la cuve de réception.

Ainsi, selon l'invention, l'ensemble du système d'entraînement est mis en oeuvre sur le corps, la noix d'entraînement étant positionnée dans un fond de l'enceinte de cuisson, en-dessous de la cuve, et venant s'engager dans l'ouverture centrale ménagée dans le fond de la cuve lors de son actionnement, afin de venir en prise avec l'accessoire de cuisine placé dans ladite cuve et de permettre son entraînement en rotation. En plaçant totalement le système d'entraînement dans le corps, la cuve de l'appareil selon l'invention présente une conception plus simple et plus légère.

Selon un mode de réalisation de l'appareil, le dispositif de déplacement de la noix d'entrainement est agencé pour déplacer à la fois la noix d'entrainement et le dispositif motorisé. Cela permet de simplifier la transmission entre le dispositif motorisé et la noix d'entraînement qui peuvent être accouplés directement l'un à l'autre. Des variantes pourraient malgré tout être envisagées avec un dispositif de déplacement agencé pour déplacer uniquement la noix d'entraînement, le dispositif motorisé restant dans une position fixe à l'intérieur du corps.

Selon ce mode de réalisation de l'appareil, de préférence, le dispositif de déplacement comprend une première couronne et une seconde couronne sur laquelle sont montés le dispositif motorisé et la noix d'entrainement. La première couronne est montée en rotation sur le corps selon un axe de rotation entre une première position et une deuxième position. En outre, la première couronne comprend au moins une première rampe hélicoïdale. Par ailleurs, la seconde couronne est montée en liaison glissière sur le corps selon la direction de ledit axe de rotation entre une première position correspondant à la position débrayée de la noix d'entrainement et une deuxième position correspondant à la position embrayée de la noix d'entrainement. Cette seconde couronne comprend au moins une seconde rampe hélicoïdale qui est en appui sur l'au moins une première rampe hélicoïdale. La rotation de la première couronne entre sa première position et sa deuxième position a pour conséquence de faire glisser les première et deuxième rampes hélicoïdales l'une sur l'autre et d'entrainer en translation la seconde couronne entre sa première position et sa deuxième position. Des variantes pourraient être envisagées, par exemple un vérin électrique qui déplace en translation selon l'axe de rotation le dispositif motorisé et la noix d'entraînement.

Selon ce mode de réalisation préférentiel de l'appareil, le dispositif de déplacement comprend un actionneur permettant la mise en rotation dans un sens ou dans l'autre de la première couronne autour de l'axe de rotation. De préférence, l'actionneur est un levier assujetti à la première couronne. En variante, l'actionneur pourrait être un moteur faisant tourner dans un sens ou dans l'autre la première couronne autour de l'axe de rotation.

Selon l'invention, l'appareil comprend un accessoire de cuisine comprenant une pale de brassage agencée pour être entrainée par la noix d'entrainement lorsque le dispositif de déplacement est dans sa position embrayée. D'autres accessoires de cuisine peuvent être envisagés, par exemple un malaxeur ou des couteaux.

Selon un mode de réalisation de l'appareil, la cuve de réception est mobile en translation par rapport à l'enceinte de cuisson entre une position fermée dans laquelle le volume intérieur de la cuve de réception est inaccessible et une position ouverte dans laquelle le volume intérieur de la cuve de réception est accessible. Le passage de la cuve de réception de sa position ouverte vers sa position fermée ou inversement est réalisable lorsque la noix d'entrainement est en position débrayée. Ainsi, la cuve ne peut être extraite de l'enceinte de cuisson ou positionnée dans celle-ci, que lorsque le dispositif d'entraînement est en position débrayée.

Selon ce mode de réalisation, l'appareil comprend un panier amovible configuré pour être placé dans la cuve de réception et retiré de celle-ci. En outre, le panier comprend une ouverture centrale disposée coaxialement à l'ouverture centrale de la cuve de réception lorsque le panier est placé dans la cuve de réception.

Selon un mode de réalisation de l'appareil, celui-ci est un appareil de cuisson à air chaud qui comprend un bloc de chauffe comportant un dispositif de chauffe disposé en regard du volume intérieur de l'enceinte de cuisson et permettant de chauffer de l'air et un dispositif de circulation permettant de déplacer l'air chauffé dans l'enceinte de cuisson. L'invention pourrait toutefois être mise en oeuvre sur d'autres types d'appareil de cuisson équipé d'un accessoire de cuisine placé dans une cuve amovible et entraîné en rotation dans cette cuve.

Selon un mode de réalisation de l'appareil, le corps comprend au moins une paroi transparente ou semi-transparente permettant une visualisation de tout ou partie du volume intérieur de la cuve de réception. De préférence, selon ce mode de réalisation, le corps intègre une source lumineuse permettant un éclairage dans l'enceinte de cuisson. Des variantes sont toutefois envisageables avec un corps comprenant une paroi opaque, c'est-à-dire bloquant complètement la visualisation du volume intérieur de la cuve de réception.

### Brève description des figures

Les caractéristiques et avantages de l'invention apparaîtront à la lecture de la description suivante s'appuyant sur des figures, parmi lesquelles :
[Fig. 1] La figure 1 illustre une vue en coupe d'un appareil de cuisson à air chaud, avec la noix d'entraînement en position embrayée ;
[Fig. 2] La figure 2 illustre une vue en coupe de l'appareil de la figure 1, avec la noix d'entraînement en position débrayée ;
[Fig. 3] La figure 3 illustre plus en détail le dispositif de déplacement de la noix d'entraînement mis en oeuvre sur l'appareil des figures 1 et 2 ;
[Fig. 4] La figure 4 illustre une première couronne du dispositif de déplacement de la figure 3 ;
[Fig. 5] La figure 5 illustre une seconde couronne du dispositif de déplacement de la figure 3.

### Description détaillée de l'invention

Dans la suite de la description, le terme appareil est utilisé pour désigner l'appareil de cuisson selon l'invention.

Les termes « supérieur », « inférieur », « haut », « bas », « avant », « arrière », « latéral », « vertical », « horizontal », qui pourraient être utilisés dans la présente description, le seront en considération de la position normale de l'appareil placé dans une configuration fonctionnelle, face à l'utilisateur et reposant sur un plan de cuisine.

Dans la suite de la description, les mêmes références sont utilisées pour définir les caractéristiques identiques sur l'appareil de cuisson.

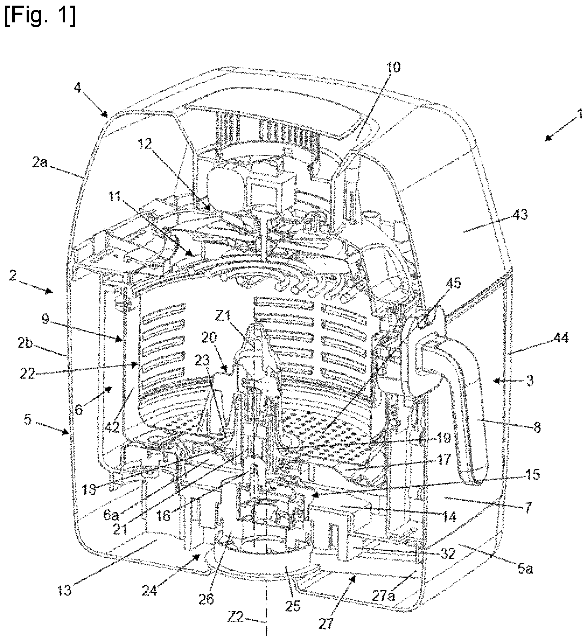

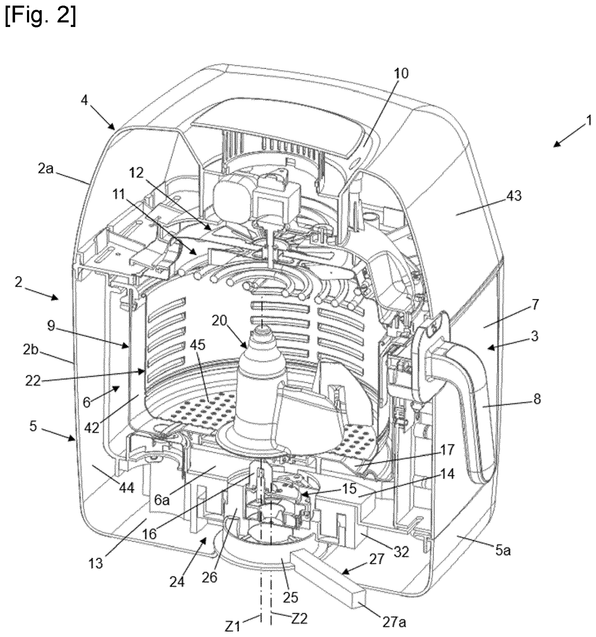

En regard des figures 1 et 2, l'appareil 1 est du type appareil de cuisson à air chaud, également appelé friteuse à air chaud, et il comprend un corps 2 et un tiroir 3 amovible du corps 2. Le corps 2 comprend dans sa partie supérieure 2a un bloc de chauffe 4 et dans sa partie inférieure 2b une base 5. A l'intérieur de cette base 5 est définie une enceinte de cuisson 6. Le tiroir 3 comprend une façade 7, une poignée de manipulation 8 et une cuve 9 ; lorsque le tiroir 3 est placé sur la base 5 du corps 2, la cuve 9 est logée dans l'enceinte de cuisson 6 qui est fermée grâce à la façade 7 et inaccessible. L'extraction du tiroir 3 s'effectue en le tirant vers l'avant par rapport au corps 2, ce qui permet de dégager la cuve 9 de l'enceinte de cuisson 6 qui est ainsi ouverte, des aliments pouvant ainsi être placés dans la cuve ou retirés de celle-ci. La fermeture de l'enceinte de cuisson 6 est obtenue par un mouvement inverse, en introduisant la cuve 9 dans l'enceinte de cuisson jusqu'à ce que la façade 7 du tiroir vienne en butée contre la face avant 5a de la base 5. Le bloc de chauffe 4 permet de faire circuler de l'air chaud vers le bas en direction de l'enceinte de cuisson 6 de sorte que lorsque le tiroir 3 est placé sur la base 5, ledit air chaud circule dans l'enceinte de cuisson 6 et dans la cuve 9. Le bloc de chauffe 4 comprend une entrée d'air 10, un dispositif de chauffe 11, du type résistif, qui est placé au-dessus de l'enceinte de cuisson 6 et permet de chauffer l'air circulant et un dispositif de circulation 12, du type ventilateur, qui permet de faire circuler l'air et de la propulser jusque dans l'enceinte de cuisson 6 en passant au préalable par ledit dispositif de chauffe 11 de l'air. L'appareil 1 comprend en outre un circuit de commande (non illustré) qui permet de contrôler le dispositif de chauffe 11 et le dispositif de circulation 12 lorsque le tiroir 3 est placé sur la base 5 et en fonction du programme de cuisson sélectionné sur un clavier de sélection (non illustré) agencé sur le corps 2. De telles caractéristiques existent déjà traditionnellement sur les appareils de cuisson à air chaud du type friteuse à air chaud ; l'homme du métier pourra s'y référer pour la mise en oeuvre de l'appareil 1 selon l'invention.

En regard des figures 1 à 3, la base 5 du corps 2 comprend un compartiment 13 agencé sous un fond 14 de l'enceinte de cuisson 6. Ce compartiment 13 permet notamment d'y loger un dispositif motorisé 15, du type moteur électrique, qui est accouplé avec une noix d'entraînement 16 agencée selon un premier axe de rotation Z1 disposé verticalement. Le dispositif motorisé 15 permet d'entraîner en rotation la noix d'entraînement 16 selon ce premier axe de rotation Z1. Ce dispositif motorisé 15 est contrôlé par le circuit de commande de l'appareil 1.

En regard des figures 1 à 3, la cuve 9 comprend un fond 17 qui est muni d'une ouverture centrale 18 ayant pour axe le premier axe de rotation Z1 lorsque la cuve 9 est placée dans l'enceinte de cuisson 6, en position fermée. La cuve 9 comprend sur son fond 17, au niveau de cette première ouverture centrale 18, un palier de roulement 19 qui s'étend vers le haut selon le premier axe de rotation Z1 à l'intérieur de la cuve 9 lorsque celle-ci est placée dans l'enceinte de cuisson 6, en position fermée. Ce palier de roulement 19 permet la réception en liaison pivot selon le premier axe de rotation Z1 d'un accessoire de cuisine 20, lorsque la cuve 9 est placée dans l'enceinte de cuisson 6 en position fermée. Cet accessoire de cuisine 20 est monté de manière amovible dans la cuve 9, par emboîtement sur le palier de roulement 19. Selon l'appareil 1 décrit dans la présente description, cet accessoire de cuisine 20 est une pale de brassage, des variantes d'accessoire de cuisine étant envisageables sur d'autres variantes d'appareil rentrant dans le cadre de l'invention. L'accessoire de cuisine 20 comprend un moyeu 21 qui est cannelé ou dentelé et qui vient se positionner à l'intérieur du palier de roulement 19 lorsque ledit accessoire de cuisine 20 est placé dans la cuve 9 et engagé sur ledit palier de roulement 19. Le moyeu 21 est accessible par la première ouverture centrale 18, en passant par le dessous du fond 17 de la cuve 9.

L'accessoire de cuisine 20 peut être placé directement dans la cuve 9. Toutefois, comme l'illustrent les figures 1 et 2, un panier 22 peut être placé de manière amovible à l'intérieur de la cuve 9. Le fond 45 de ce panier 22 comprend également une seconde ouverture centrale 23 qui correspond avec la première ouverture centrale 18 de la cuve 9 et permet le passage du palier de roulement 19 au travers de cette seconde ouverture centrale 23, lors de la mise en place du panier 22 dans la cuve 9. Ainsi, l'accessoire de cuisine 20 peut être engagé sur ledit palier de roulement 19 qui pénètre à l'intérieur du panier 22 placé dans la cuve 9, le moyeu 21 étant dans ce cas également logé à l'intérieur du palier de roulement 19 est accessible par la première ouverture centrale 18, en passant par le dessous du fond 17 de la cuve 9.

En regard des figures 1 à 5, l'appareil 1 comprend un dispositif de déplacement 24 qui est logé dans le compartiment 13 de la base 5, en-dessous du dispositif motorisé 15. Le dispositif de déplacement 24 comprend dans sa partie inférieure une première couronne 25 et dans sa partie supérieure une seconde couronne 26.

La première couronne 25 est montée rotative selon un second axe de rotation Z2 parallèle au premier axe de rotation Z1. Selon l'appareil 1 illustré sur les figures 1 et 2, ces deux axes de rotation Z1, Z2 sont différents, mais ils pourraient être confondus sur d'autres variantes de l'appareil 1, en fonction de la conception du dispositif motorisé 15 entraînant en rotation la noix d'entraînement 16. L'actionnement en rotation de la première couronne 25 selon le second axe de rotation Z2 est réalisé au moyen d'un levier 27 qui pourra être manoeuvré manuellement depuis l'extérieur de l'appareil 1, par exemple en rendant accessible l'extrémité 27a de ce levier 27 depuis la face avant 5a de la base 5. On pourrait au contraire prévoir un actionneur complémentaire à l'intérieur du compartiment 13 de la base 5, par exemple un relais magnétique ou un petit vérin (non illustré), qui permettrait d'agir sur le levier 27 pour faire tourner la première couronne 25 selon le second axe de rotation Z2. Un second moteur électrique (non illustré) pourrait aussi être incorporé dans le compartiment 13 en remplacement du levier 27, afin de faire tourner directement la première couronne 25 selon le second axe de rotation Z2.

La seconde couronne 26 est monté en translation dans le sens du second axe de rotation Z2. Pour cela, la seconde couronne 26 comprend deux ailes 28, 29 disposées symétriquement par rapport au second axe de rotation Z2. Ces deux ailes 28, 29 disposent chacune d'un trou circulaire 30, 31 agencé dans le sens du second axe de rotation Z2 et, de même, du premier axe de rotation Z1. Ces trous circulaires 30, 31 sont débouchant sur lesdites ailes 28, 29. En outre, le compartiment 13 de la base 5 comprend une pièce de guidage 32 agencée sous le fond 14 de l'enceinte de cuisson 6. Cette pièce de guidage 32 comprend deux plots circulaires 33, 34 qui s'entendent vers le bas sous le fond 14 de l'enceinte de cuisson 6, parallèlement aux premier et second axes de rotation Z1, Z2. Ces plots circulaires 33, 34 s'engagent respectivement dans les deux trous circulaires 30, 31 et assurent ainsi un guidage en translation de la seconde couronne 26 dans le sens du second axe de rotation Z2. La pièce de guidage 32 comprend également un alésage 35 qui communique avec une ouverture circulaire 36 sur le fond 14 de l'enceinte de cuisson 6, l'alésage 35 et l'ouverture circulaire 36 ayant pour axe le second axe de rotation Z2. Le diamètre de l'ouverture circulaire 36 correspondant au diamètre de l'alésage 35. En outre, la seconde couronne 26 comprend également un corps 37 comportant une partie supérieure cylindrique 38 ayant pour axe le second axe de rotation Z2. Cette partie supérieure cylindrique 38 est montée glissant dans l'alésage 35 pour son guidage en translation selon le second axe de rotation Z2.

La partie supérieure cylindrique 38 du corps 37 de la seconde couronne 26 passe au travers de l'alésage 35 sur la pièce de guidage 32 et au travers de l'ouverture circulaire 36 du fond 14 de l'enceinte de cuisson 6. Cette partie supérieure cylindrique 38 comprend un logement 39 qui reçoit le dispositif motorisé 15 avec lequel est accouplée la noix d'entraînement 16 qui s'étend vers haut selon le premier axe de rotation Z1. Ainsi la noix d'entraînement 16 passe au travers de l'ouverture circulaire 36 sur le fond 14 de l'enceinte de cuisson 6 et vient se positionner en partie inférieure 6a de ladite enceinte de cuisson 6.

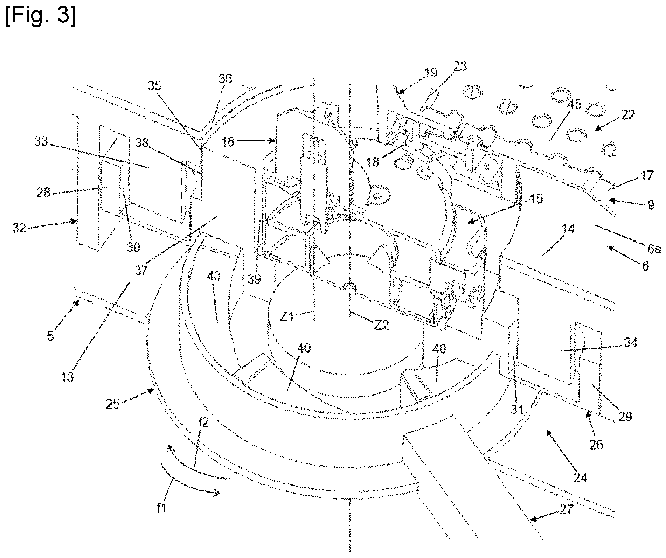

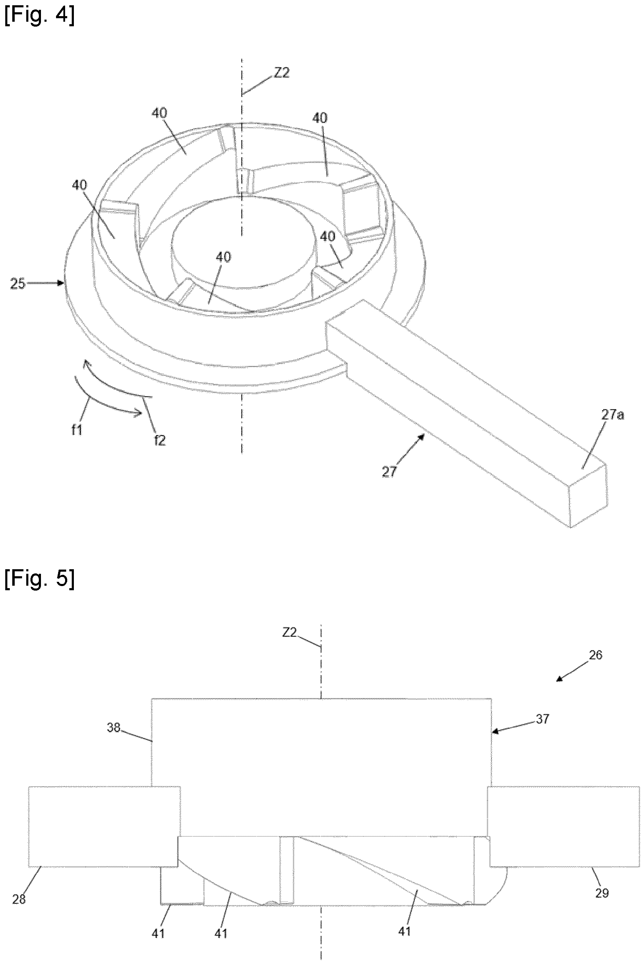

En regard notamment des figures 3 à 5, la première couronne 25 comprend des premières rampes hélicoïdales 40 et la seconde couronne 26 comprend des secondes rampes hélicoïdales 41 complémentaires aux premières rampes hélicoïdales 40 et disposées en appui et en vis-à-vis de celles-ci. Sur la figure 4, la première couronne 25 comprend cinq premières rampes hélicoïdales 40, le nombre de secondes rampes hélicoïdales 41 étant identique. Le nombre de premières rampes hélicoïdales 40 et de secondes rampes hélicoïdales pourrait être différent de cinq, celui-ci étant au moins égal à un.

Lorsque la première couronne 25 tourne dans le sens antihoraire autour du second axe de rotation Z2, tel qu'illustré par la flèche f1 sur la figure 3, les premières rampes hélicoïdales 40 appuient et glissent sur les secondes rampes hélicoïdales 41, ce qui permet à la seconde couronne 26 de translater vers le haut selon le second axe de rotation Z2 et déplacent concomitamment le dispositif motorisé 15 et la noix d'entraînement 16. Ainsi, la noix d'entraînement 16 translate vers le haut selon le premier axe de rotation Z1 vers une position embrayée selon laquelle ladite noix d'entraînement 16 pénètre dans la cuve 9 et dans le palier de roulement 19 en passant par la première ouverture centrale 18 sur le fond 17 de ladite cuve 9 et vient embrayer avec le moyeu 21 de l'accessoire de cuisine 20, comme l'illustre la figure 1. Dans cette position embrayée, la cuve 9 et le tiroir 3 restent bloqués sur la base 5 du fait que la noix d'entraînement 16 embraye avec le moyeu 21 de l'accessoire de cuisine 20, ce qui maintient l'enceinte de cuisson 6 en position fermée.

Inversement, lorsque la première couronne 25 tourne dans le sens horaire autour du second axe de rotation Z2, tel qu'illustré par la flèche f2 sur la figure 3, les premières rampes hélicoïdales 40 se rétractent en glissant vis-à-vis des secondes rampes hélicoïdales 41, ce qui permet à la seconde couronne 26 de translater vers le bas selon le second axe de rotation Z2 sous l'action de la force de gravité, et déplacent concomitamment le dispositif motorisé 15 et la noix d'entraînement 16. Ainsi, la noix d'entraînement 16 translate vers le bas selon le premier axe de rotation Z1 vers une position débrayée selon laquelle ladite noix d'entraînement 16 est extraite du palier de roulement 19 et de la cuve 9 et, par conséquent, débrayée du moyeu 21 de l'accessoire de cuisine 20 et positionnée en-dessous de la cuve 9 dans la partie inférieure 6a de l'enceinte de cuisson 6, comme l'illustre la figure 2. Dans cette position débrayée, la cuve 9 peut être extraite de l'enceinte de cuisson 6 en tirant le tiroir 3 vers l'avant de l'appareil 1 pour son dégagement de la base 5. Inversement, la cuve 9 peut être repositionnée librement dans l'enceinte de cuisson 6 tant que la noix d'entraînement 16 demeure dans sa position débrayée.

Des variantes du dispositif de déplacement 24 sont envisageables sur l'appareil 1, en demeurant dans le cadre de la présente invention. Par exemple, la première couronne 25 pourrait être remplacée par un ou deux vérins électriques qui déplacent directement la seconde couronne 26 dans le sens du second axe de rotation Z2.

D'autres caractéristiques sont envisageables dans le cadre de l'invention. Selon une réalisation préférentielle de l'appareil 1, au moins la paroi 43 du bloc de chauffe 4 est transparente ou semi-transparente afin de permettre une visualisation de tout ou partie du volume intérieur 42 de la cuve 9. La paroi de contour 44 de la base 5 et la façade 7 du tiroir 3 peuvent également être transparentes ou semi-transparentes, dans ce même but. En outre, le corps 2 intègre une source lumineuse (non illustrée) qui peut être placée dans la base 5 ou dans le bloc de chauffe 4, cette source lumineuse permettant un éclairage dans l'enceinte de cuisson 6, ce qui permet une meilleure visualisation du volume intérieur 42 de la cuve 9. Bien entendu, d'autres variantes de l'appareil 1 sont envisageables avec un corps 2 complètement opaque, la visualisation de la cuve 9 dans l'enceinte de cuisson 6 n'étant alors pas possible.

## Revendications

1. Appareil (1) de cuisson pour la réalisation d'une préparation culinaire, lequel comprend un corps (2) muni d'une enceinte de cuisson (6) et une cuve (9) de réception d'aliments présentant un volume intérieur (42) et placée de manière amovible dans l'enceinte de cuisson, la cuve de réception comprenant un fond (17) comportant une ouverture centrale (18) ménagée pour le passage d'une noix d'entrainement (16) destinée à entrainer en rotation un accessoire de cuisine (20) amovible disposé à un emplacement déterminé dans la cuve de réception, le corps (2) comprenant en outre un dispositif motorisé (15) agencé pour entrainer en rotation la noix d'entrainement (16), **caractérisé en ce que** l'appareil (1) de cuisson comprend un dispositif de déplacement (24) de la noix d'entrainement (16) entre une position débrayée dans laquelle la noix d'entrainement est en retrait de l'ouverture centrale (18) de la cuve(9) de réception et en retrait de l'accessoire de cuisine (20) lorsque celui-ci est disposé à son emplacement déterminé dans la cuve de réception et une position embrayée dans laquelle la noix d'entrainement (16) est en prise avec l'accessoire de cuisine (20) lorsque celui-ci est disposé à son emplacement déterminé dans la cuve de réception (9).

2. Appareil (1) selon la revendication 1, dans lequel le dispositif de déplacement (24) de la noix d'entrainement (16) est agencé pour déplacer à la fois la noix d'entrainement et le dispositif motorisé (15).

3. Appareil (1) selon l'une quelconque des revendication 1 ou 2, dans lequel le dispositif de déplacement (24) comprend une première couronne (25) et une seconde couronne (26) sur laquelle sont montés le dispositif motorisé (15) et la noix d'entrainement (16), la première couronne étant montée en rotation sur le corps selon un axe de rotation (Z2) entre une première position et une deuxième position, ladite première couronne (25) comprenant en outre au moins une première rampe hélicoïdale (40), et la seconde couronne (26) étant montée en liaison glissière sur le corps (2) selon la direction de l'axe de rotation (Z2) entre une première position correspondant à la position débrayée de la noix d'entrainement (16) et une deuxième position correspondant à la position embrayée de la noix d'entrainement, ladite seconde couronne (26) comprenant au moins une seconde rampe hélicoïdale (41) qui est en appui sur l'au moins une première rampe hélicoïdale (40), la rotation de la première couronne (25) entre sa première position et sa deuxième position ayant pour conséquence de faire glisser les première et deuxième rampes hélicoïdales (40, 41) l'une sur l'autre et d'entrainer en translation la seconde couronne (26) entre sa première position et sa deuxième position.

4. Appareil (1) selon la revendication 3, dans lequel le dispositif de déplacement (24) comprend un actionneur permettant la mise en rotation dans un sens ou dans l'autre de la première couronne (25) autour de l'axe de rotation (Z2).

5. Appareil (1) selon la revendication 4, dans lequel l'actionneur est un levier (27) assujetti à la première couronne (25).

6. Appareil (1) selon l'une quelconque des revendications 1 à 5, lequel comprend un accessoire de cuisine (20) comprenant une pale de brassage agencée pour être entrainée par la noix d'entrainement (16) lorsque le dispositif de déplacement (24) est dans sa position embrayée.

7. Appareil (1) selon l'une quelconque des revendications 1 à 6, dans lequel la cuve de réception (9) est mobile en translation par rapport à l'enceinte de cuisson (6) entre une position fermée dans laquelle le volume intérieur (42) de la cuve de réception (9) est inaccessible et une position ouverte dans laquelle le volume intérieur de la cuve de réception est accessible, le passage de la cuve de réception de sa position ouverte vers sa position fermée ou inversement étant réalisable lorsque la noix d'entrainement (16) est en position débrayée.

8. Appareil (1) selon la revendication 7, lequel comprend un panier (22) amovible configuré pour être placé dans la cuve de réception (9) et retiré de celle-ci, le panier comprenant une seconde ouverture centrale (23) disposée coaxialement à la première ouverture centrale (18) de la cuve de réception lorsque le panier est placé dans ladite cuve de réception.

9. Appareil (1) selon l'une quelconque des revendications 1 à 8, lequel est un appareil de cuisson à air chaud qui comprend un bloc de chauffe (4) comportant un dispositif de chauffe (11) disposé en regard du volume intérieur de l'enceinte de cuisson (6) et permettant de chauffer de l'air et un dispositif de circulation (12) permettant de déplacer l'air chauffé dans l'enceinte de cuisson.

10. Appareil (1) selon l'une quelconque des revendications 1 à 9, dans lequel le corps (2) comprend au moins une paroi (43) transparente ou semi-transparente permettant une visualisation de tout ou partie du volume intérieur (42) de la cuve de réception (9).

11. Appareil (1) selon la revendication 10, dans lequel le corps (2) intègre une source lumineuse permettant un éclairage dans l'enceinte de cuisson (6).

## Patentansprüche

1. Kocheinrichtung (1) für die Durchführung einer Kochzubereitung, umfassend einen Körper (2), der mit einer Kochkammer (6) und einem Behälter (9) zur Aufnahme von Lebensmitteln versehen ist, der ein Innenvolumen (42) darstellt und auf abnehmbare Weise in der Kochkammer platziert ist, wobei der Aufnahmebehälter einen Boden (17) umfasst, der eine mittlere Öffnung (18) umfasst, die zum Durchlassen einer Antriebsnuss (16) eingerichtet ist, die dazu vorgesehen ist, ein abnehmbares Kochzubehör (20), das an einer bestimmten Stelle im Aufnahmebehälter angeordnet ist, in Drehung zu versetzen, wobei der Körper (2) weiter eine motorangetriebene Vorrichtung (15) umfasst, die eingerichtet ist, um die Antriebsnuss (16) in Drehung zu versetzen, **dadurch gekennzeichnet, dass** die Kocheinrichtung (1) eine Bewegungsvorrichtung (24) der Antriebsnuss (16) zwischen einer entkuppelten Position, bei der die Antriebsnuss von der mittleren Öffnung (18) des Aufnahmebehälters (9) zurückgezogen ist und vom Kochzubehör (20) zurückgezogen ist, wenn dieses an seiner bestimmten Stelle im Aufnahmebehälter angeordnet ist, und einer eingekuppelten Position, bei der die Antriebsnuss (16) in das Kochzubehör (20) eingreift, wenn dieses an seiner bestimmten Stelle im Aufnahmebehälter (9) angeordnet ist, umfasst.

2. Einrichtung (1) nach Anspruch 1, wobei die Bewegungsvorrichtung (24) der Antriebsnuss (16) eingerichtet ist, um gleichzeitig die Antriebsnuss und die motorangetriebene Vorrichtung (15) zu bewegen.

3. Einrichtung (1) nach einem der Ansprüche 1 oder 2, wobei die Bewegungsvorrichtung (24) eine erste Krone (25) und eine zweite Krone (26) umfasst, auf der die motorangetriebene Vorrichtung (15) und die Antriebsnuss (16) montiert sind, wobei die erste Krone drehbar auf dem Körper entlang einer Drehachse (Z2) zwischen einer ersten Position und einer zweiten Position montiert ist, wobei die erste Krone (25) weiter mindestens eine erste spiralförmige Rampe (40) umfasst, und wobei die zweite Krone (26) in Gleitverbindung auf dem Körper (2) entlang der Richtung der Drehachse (Z2) zwischen einer ersten Position, die der entkuppelten Position der Antriebsnuss (16) entspricht, und einer zweiten Position, die der eingekuppelten Position der Antriebsnuss entspricht, montiert ist, wobei die zweite Krone (26) mindestens eine zweite spiralförmige Rampe (41) umfasst, die auf der mindestens einen ersten spiralförmigen Rampe (40) aufliegt, wobei die Drehung der ersten Krone (25) zwischen ihrer ersten Position und ihrer zweiten Position zur Folge hat, dass die erste und die zweite spiralförmige Rampe (40, 41) dazu gebracht werden, aufeinander zu gleiten, und die zweite Krone (26) zwischen ihrer ersten Position und ihrer zweiten Position zu verschieben.

4. Einrichtung (1) nach Anspruch 3, wobei die Bewegungsvorrichtung (24) einen Aktuator umfasst, der ermöglicht, die erste Krone (25) in einer oder in der anderen Richtung um die Drehachse (Z2) herum in Drehung zu versetzen.

5. Einrichtung (1) nach Anspruch 4, wobei der Aktuator ein Hebel (27) ist, der der ersten Krone (25) unterworfen ist.

6. Einrichtung (1) nach einem der Ansprüche 1 bis 5, umfassend ein Kochzubehör (20), das eine Mischschaufel umfasst, die eingerichtet ist, um von der Antriebsnuss (16) angetrieben zu werden, wenn die Bewegungsvorrichtung (24) in ihrer eingekuppelten Position ist.

7. Einrichtung (1) nach einem der Ansprüche 1 bis 6, wobei der Aufnahmebehälter (9) in Bezug auf die Kochkammer (6) zwischen einer geschlossenen Position, bei der das Innenvolumen (42) des Aufnahmebehälters (9) unzugänglich ist, und einer offenen Position, bei der das Innenvolumen des Aufnahmebehälters zugänglich ist, verschiebbar ist, wobei der Übergang des Aufnahmebehälters von seiner offenen Position zu seiner geschlossenen Position oder umgekehrt durchgeführt werden kann, wenn die Antriebsnuss (16) in der ausgekuppelten Position ist.

8. Einrichtung (1) nach Anspruch 7, umfassend einen abnehmbaren Korb (22), der ausgelegt ist, um im Aufnahmebehälter (9) platziert zu werden und von diesem entnommen zu werden, wobei der Korb eine zweite mittlere Öffnung (23) umfasst, die koaxial zur ersten mittleren Öffnung (18) des Aufnahmebehälters angeordnet ist, wenn der Korb im Aufnahmebehälter platziert ist.

9. Einrichtung (1) nach einem der Ansprüche 1 bis 8, die eine Heizluftkocheinrichtung ist, die einen Heizblock (4) umfasst, umfassend eine Heizvorrichtung (11), die dem Innenvolumen der Kochkammer (6) zugewandt angeordnet ist und ermöglicht, Luft zu erhitzen, und eine Zirkulationsvorrichtung (12), die ermöglicht, die erhitzte Luft in der Kochkammer zu bewegen.

10. Einrichtung (1) nach einem der Ansprüche 1 bis 9, wobei der Körper (2) mindestens eine durchsichtige oder halbdurchsichtige Wand (43) umfasst, die eine Besichtigung der Gesamtheit oder eines Teils des Innenvolumens (42) des Aufnahmebehälters (9) ermöglicht.

11. Einrichtung (1) nach Anspruch 10, wobei im Körper (2) eine Lichtquelle eingebaut ist, die eine Beleuchtung in der Kochkammer (6) ermöglicht.

## Claims

1. Cooking appliance (1) for performing a culinary preparation, which comprises a body (2) provided with a cooking chamber (6) and a container (9) for receiving food having an interior volume (42) and removably placed in the cooking chamber, the receiving container comprising a bottom (17) comprising a central opening (18) arranged for the passage of a drive nut (16) intended to rotate a removable cooking accessory (20) arranged at a determined location in the receiving container, the body (2) further comprising a motorised device (15) arranged to rotate the drive nut (16), **characterised in that** the cooking appliance (1) comprises a device for moving (24) the drive nut (16) between a disengaged position wherein the drive nut is withdrawn from the central opening (18) of the receiving container (9) and withdrawn from the cooking accessory (20) when the latter is arranged at its determined location in the receiving container and an engaged position wherein the drive nut (16) is engaged with the cooking accessory (20) when the latter is arranged at its determined location in the receiving container (9).

2. Appliance (1) according to claim 1, wherein the device for moving (24) the drive nut (16) is arranged to move both the drive nut and the motorised device (15).

3. Appliance (1) according to any of claims 1 or 2, wherein the moving device (24) comprises a first ring (25) and a second ring (26) on which the motorised device (15) and the drive nut (16) are mounted, the first ring being rotatably mounted on the body according to an axis of rotation (Z2) between a first position and a second position, said first ring (25) further comprising at least one first spiral ramp (40), and the second ring (26) being mounted as a sliding connection on the body (2) in the direction of the axis of rotation (Z2) between a first position corresponding to the disengaged position of the drive nut (16) and a second position corresponding to the engaged position of the drive nut, said second ring (26) comprising at least one second spiral ramp (41) which is bearing against the at least one first spiral ramp (40), the rotation of the first ring (25) between its first position and its second position having for consequence to slide the first and second spiral ramps (40, 41) on one another and to drive in translation the second ring (26) between its first position and its second position.

4. Appliance (1) according to claim 3, wherein the moving device (24) comprises an actuator making it possible to rotate in one direction or the other the first ring (25) about the axis of rotation (Z2).

5. Appliance (1) according to claim 4, wherein the actuator is a lever (27) subject to the first ring (25).

6. Appliance (1) according to any of claims 1 to 5, which comprises a cooking accessory (20) comprising a mixing blade arranged to be driven by the drive nut (16) when the moving device (24) is in its engaged position.

7. Appliance (1) according to any of claims 1 to 6, wherein the receiving container (9) is mobile in translation with respect to the cooking chamber (6) between a closed position wherein the interior volume (42) of the receiving container (9) is inaccessible and an open position wherein the interior volume of the receiving container is accessible, with the passage of the receiving container from its open position to its closed position or inversely able to be carried out when the drive nut (16) is in disengaged position.

8. Appliance (1) according to claim 7, which comprises a removable basket (22) designed to be placed in the receiving container (9) and removed from the latter, the basket comprising a second central opening (23) arranged coaxially to the first central opening (18) of the receiving container when the basket is placed in said receiving container.

9. Appliance (1) according to any of claims 1 to 8, which is a hot air cooking appliance that comprises a heating unit (4) comprising a heating device (11) arranged facing the interior volume of the cooking chamber (6) and making it possible to heat air and a circulation device (12) making it possible to move the air heated in the cooking chamber.

10. Appliance (1) according to any of claims 1 to 9, wherein the body (2) comprises at least one transparent or semi-transparent wall (43) allowing for a visualisation of all or a portion of the interior volume (42) of the receiving container (9).

11. Appliance (1) according to claim 10, wherein the body (2) incorporates a light source allowing for lighting in the cooking chamber (6).
